# EUROPEAN PATENT APPLICATION

(11) **EP 1 796 049 A2**
(43) Date of publication of application: **13.06.2007**
(21) Application number: 05778339.1
(22) Date of filing: 12.09.2005
(51) Int. Cl.: G06T 17/40, G06T 3/00, G06T 15/00

(54) **IMAGE PROCESSING DEVICE, IMAGE PROCESSING METHOD, INFORMATION RECORDING MEDIUM, AND PROGRAM**

(30) Priority: 21.09.2004 JP 2004273846
(71) Applicant: Konami Digital Entertainment Co., Ltd., Tokyo 106-6114 (JP)
(72) Inventor: OKUBO, Tabeshi c/o Konami Digital Ent. Co., Ltd., Minato-ku, Tokyo 106-6114 (JP)
(74) Representative: Rüger, Barthelt & Abel Patentanwälte
(86) International application number: PCT/JP2005/016777
(87) International publication number: WO 2006/033259

(57) **Abstract**

To give an effect for imparting an air of speed to an image, a dividing unit (202) of an image processing device (201) divides an original image into a plurality of regions based on an aggregate of pixels, an acquiring unit (203) acquires a representative value of each of the plurality of divided regions from pixel values of pixels included in that region, a mixing unit (204) obtains a processed image in which, for each of the pixels included in the original image, the representative value acquired from the region in which that pixel is included and the pixel value of that pixel are mixed at a predetermined mixing ratio, an output unit (205) outputs the processed image, and the dividing unit (202) divides the image in a manner that the shape of each of the plurality of regions is elongate in a direction in which a picture made up of pixels included in that region moves.

## Description

### Technical Field

The present invention relates to an image processing device and an image processing method suitable for giving an effect of imparting an air of speed to an image, a program for realizing these on a computer, and a computer-readable information recording medium storing the program.

### Background Art

Conventionally, various techniques have been proposed in the field of techniques for games, etc., for making one feel an air of speed much more from the image display when a moving image, etc is displayed. For example, the applicant has disclosed in the literature indicated below, an image processing technique for giving an air of speed to the observer by changing the compression rate in displaying an image according to the display speed.
Patent Literature 1: Japanese Patent No. 3344555

Other than this, such an image processing technique has been proposed, which is for performing image processing in such a way that a picture included in an image is blurred in the direction in which the picture moves as if its afterimage could be seen, so that an air of speed may be imparted to the image. Such an image processing technique is called motion blur effect, which is for expressing a one-directional movement by a move of an object, by blurring.
Generally, for giving a motion blur effect to an image, it is necessary to create the image after confirming the direction in which the picture of an object is to move, in order to consider the blur of the picture in that direction, necessitating a lot of calculations and a long time for creating the image.

### Disclosure of Invention

### Problem to be Solved by the Invention

However, for displaying images on game devices or various simulation devices, various rapid and easy image processing techniques for easily imparting an air of speed are required.
The present invention was made to solve such a problem as described above, and an object of the present invention is to provide an image processing device and an image processing method suitable for giving an effect of imparting an air of speed to an image, a program for realizing these on a computer, and a computer-readable information recording medium storing the program.

### Means for Solving the Problem

To achieve the above object, the following invention will be disclosed according to the principle of the present invention.
An image processing device according to a first aspect of the present invention comprises a dividing unit, an acquiring unit, a mixing unit, and an output unit, which are configured as follows.
That is, the dividing unit divides an image (hereinafter referred to as "original image"), which is made up of an aggregate of pixels, into a plurality of regions.
Typically, the original image is a bitmap image having a rectangular shape suitable for being displayed on display devices of various types. The respective pixels included in the bitmap are processed as pixels, and the value representing the hue, the brightness, or the saturation of the pixels or the RGB (Red Green Blue) value of the pixels is to be the pixel value.

Here, the dividing unit divides the image in a manner that a shape of each of the plurality of regions is elongate in a direction in which a picture made up of pixels included in that region moves.
For example, in a case where an image to be displayed on a display device is a moving image representing, by three-dimensional graphics display, the state of the forward view seen from the viewpoint of a driver in a racing game, the point of infinity is arranged at the center of the screen and the moving direction of a picture made up of pixels is the direction to get away from the point of infinity. Further, the moving velocity of the picture becomes higher as the picture gets more away from the point of infinity. Even in case of imparting an air of speed to a one-frame still image, the moving direction of a picture can be considered in the same manner.
According to the present invention, the regional division is made in a manner that the divided regions are elongate in this moving direction.

Meanwhile, the acquiring unit acquires a representative value of each of the plurality of divided regions, from pixel values of pixels included in that region.
Since a plurality of pixels are included in each region, there may be various conceivable manners for acquiring the representative value from the plurality of pixels, but the manners will be described later.

Further, the mixing unit obtains a processed image, which is a processing result of mixing, for each of the pixels included in the original image, the representative value acquired from the region in which that pixel is included, and the pixel value of that pixel, at a predetermined mixing ratio.
This is for obtaining a new image (processed image) in which the pixel value of a pixel of the original image and the representative value of the region in which that pixel is included are α-blended at a predetermined α value. The α value may be a constant throughout the image, may be changed according the moving velocity of pixels included in a region, or may be changed according to the velocity of the car (the moving velocity of the viewpoint in a virtual three-dimensional space) the driver is on, speaking in relation to the above-described example of the racing game.

Lastly, the output unit outputs the obtained processed image.
As described above, the result of α blending is displayed and output on a display device or the like. Since the shape of each region is elongate along the moving direction of the picture, the result of α blending appears as an image blurred in the moving direction, as compared with the original image. This gives an effect like an afterimage by moving.
According to the present invention, by dividing an image into regions having a shape elongate in the direction of moving distance and acquiring the representative value of those regions, it is possible to easily obtain an afterimage-like effect, and easily give an air of speed to the observer.

Further, in the image processing device of the present invention, the acquiring unit may acquire an average of the pixel values of each of the plurality of regions, as the representative value of that region.
That is, by using the average of pixel values of a region as the representative value of that region, it is intended to express a natural afterimage. And as will be described later, depending on the shape of division, it is possible to easily obtain the average value by an image calculation processor or the like.
This invention is one of the preferred embodiments of the above-described invention, and this invention makes it possible to realize natural expression of an afterimage.

Further, in the image processing device of the present invention, the acquiring unit may acquire, as the representative value of each of the plurality of regions, the pixel value of a pixel at a predetermined position, included in that region.

In the foregoing invention, the average of the pixel values of a region is used as the representative value, whereas this invention is for providing an easier manner of acquiring the representative value. The predetermined position of each region may be the center or the gravity point of that region, or any point in the farthest upstream or any point in the farthest downstream in the moving direction of a picture, or various methods may be adopted.

This invention is one of the preferred embodiments of the above-described invention, and this invention makes it possible to very easily acquire the representative value for expressing an afterimage, and contribute to reducing the amount of calculations.

Further, in the image processing device of the present invention, borders of each of the plurality of regions may be defined by a first arc whose center is at a predetermined point, a second arc whose center is at the predetermined point or the predetermined point, a line segment included in a first straight line which runs on the predetermined point, and a line segment included in a second straight line which runs on the predetermined point, and the direction in which the picture moves may be a direction which is along the first arc.
Because the direction in which the picture moves is a direction along the first arc, this is for obtaining an afterimage effect of a rotating object. That is, the center of the sector is the center of rotation.
Under the above-described invention, this invention makes it possible to given an air of speed to the observer by a natural afterimage expression representing rotation.

Further, in the image processing device of the present invention, borders of each of the plurality of regions may be defined by at least a line segment included in a first straight line which runs on a predetermined point and a line segment included in a second straight line which runs on the predetermined point, and the direction in which the picture moves may be a direction which converges on the predetermined point or radiates from the predetermined point.

In the foregoing invention, the regional division is done by using sectors, while according to the present invention, the regional division is done by using quadrangles. When thinking in the example of the racing game, regarding one of the pairs of two opposing sides of a quadrangle, these two opposing sides cross at the point of infinity (the predetermined point) when they are extended respectively (and therefore the first straight line and the second straight line are obtained).
The direction of the two sides of the other pair may be arbitrarily determined. For example, in a case where the shape of the original image is a rectangle, such a manner can be conceived, of making these two sides parallel with such a side of the rectangle, to which the quadrangle is positioned most closely of all the sides of the rectangle.
Further, in a case where the shape of the original image is a trapezoid and straight lines that run along the oblique sides of the trapezoid cross at a predetermined point, the two sides of the other pair may be made parallel with the upper side and lower side.
According to this invention, since the divided regions are quadrangles, it is possible to easily acquire the representative value of the regions by using a texture pasting function or the like of an image calculation processor, and realize rapid processes.

Further, the image processing device of the present invention can be configured as follows.

That is, the dividing unit performs its dividing and the acquiring unit performs its acquiring by performing perspective projection of the original image onto an interim first image made up of an aggregate of a smaller number of pixels than that of the pixels in the original image, performing inverse perspective projection of the interim first image onto an interim second image having a same shape as the original image, and making a pixel value of each pixel included in the interim second image take a representative value of a region which includes a position of that pixel.
In three-dimensional graphics, the texture information of a triangle, a quadrangle, etc. is pasted on a region arranged in a virtual three-dimensional space, and this is the time when perspective projection is performed. And in performing such pasting, it is possible to increase or decrease the number of pixels.

If the number of pixels decreases in pasting, this pasting corresponds to calculating and acquiring the representative value of each region. This results in the interim first image.
Further, if the number of pixels increases in restoring the interim first image to have the same shape as the original image, a pixel having the representative value is to be arranged at coordinates which correspond to where the representative value has not originally been arranged in the original image.

Then, the mixing unit obtains the processed image, by mixing the original image and the interim second image at the predetermined mixing ratio.
As described above, since a pixel having the representative value of a region in which a given pixel of the interim second image is included is depicted at the given pixel, α blending of the interim second image with the original image will produce an afterimage-like effect.

According to this invention, it is possible to use the technique of polygon-to-polygon projection such as texture pasting, etc., which is widely used in the field of three-dimensional graphics, and whose exclusive-purpose hardware has become common, making it possible to perform rapid processes.

An image processing device according to another aspect of the present invention comprises a first creating unit, a second creating unit, a mixing unit, and an output unit, which are configured as follows.

First, the first creating unit renders, as texture, an original image made up of an aggregate of pixels, to create an interim first image made up of an aggregate of less pixels than those in the original image.
Likewise the above-described invention, in a case where the original image is defined by a polygon, the first creating unit projects the original image onto a polygon having the same number of vertexes as the original image. Thus, the interim first image to be obtained is the original image as "collapsed" according to a predetermined rule.

Meanwhile, the second creating unit renders the created interim first image as texture, to create an interim second image which has a same shape as the original image.
That is, the second creating unit performs the process of restoring the interim first image which is "collapsed" as described above to the original shape. Through these processes, the pixel value is defined in the course of a plurality of pixels in the original image → one point in the interim first image → a plurality of pixels in the interim second image.
At the stage of the plurality of pixels in the original image → the one point in the interim first image, the average value of the plurality of pixels in the original image or a pixel at a predetermined position is to be acquired as the representative value. And any of the plurality of pixels in the interim second image is to have a pixel value equal to the acquired representative value.

Further, the mixing unit creates a processed image by mixing the original image and the created interim second image at a predetermined mixing ratio.
Likewise the above-described invention, the mixing unit performs α blending.
Various techniques can be used for the α value, likewise the above-described invention.
Then, the output unit outputs the created processed image.
Likewise the above-described invention, the processed image is output to a display device or the like.

Here, according to the present invention, a shape of a region to which each of the pixels included in the interim first image is rendered in the interim second image is elongate in a direction in which a picture made up of pixels included in that region in the original image moves, and that region in the original image is rendered on that pixel in the interim first image.

In other words, in case of performing conversion of the plurality of pixels in the original image → the one point in the interim first image→ the plurality of pixels in the interim second image, "the plurality of pixels in the original image" correspond to "the region", and the shape of the region is made elongate in the direction in which the picture moves.

Hence, especially in a case where there is the aid of a three-dimensional image calculation processor available, rapid image processing calculations can be performed and an image effect like an afterimage can be achieved to thereby give an air of speed to the observer as well as the above-described invention.

Further, in the image processing device of the present invention, the predetermined mixing ratio of each of the plurality of regions may be defined according to a distance between that region and the predetermined point, and the mixing ratio of the representative value with respect to that pixel value may increase as the distance increases.
When pictures are observed in a moving image, any picture that is far from the point of infinity moves in the screen at a higher velocity than a picture that is close to the point of infinity. Hence, the mixing ratio is varied from the neighborhood of the point of infinity to the distance from the point of infinity, such that the afterimage effect is stronger where farther from the point of infinity.
According to the present invention, it is possible to present the effect of a real afterimage to the observer only by appropriately changing the mixing ratio at each pixel, making it possible to easily give an air of speed.

An image processing method according to another aspect of the present invention comprises a diving step, an acquiring step, a mixing step, and an outputting step, which are configured as follows.
That is, at the dividing step, an image (hereinafter referred to as "original image"), which is made up of an aggregate of pixels is divided into a plurality of regions.
Meanwhile, at the acquiring step, a representative value of each of the plurality of divided regions is acquired from pixel values of pixels included in that region.
Further, at the mixing step, a processed image, which is a processing result of mixing, for each of the pixels included in the original image, the representative value acquired from the region in which that pixel is included, and the pixel value of that pixel, at a predetermined mixing ratio, is obtained.
Then, at the outputting step, the obtained processed image is output.
Here, at the dividing step, the image is divided in a manner that a shape of each of the plurality of regions is elongate in a direction in which a picture made up of pixels included in that region moves.

An image processing method according to another aspect of the present invention comprises a first creating step, a second creating step, a mixing step, and an outputting step, which are configured as follows.
That is, at the first creating step, an original image made up of an aggregate of pixels is rendered as texture, to create an interim first image made up of an aggregate of less pixels than those in the original image.
Meanwhile, at the second creating step, the created interim first image is rendered as texture, to create an interim second image which has a same shape as the original image.

Then, at the mixing step, a processed image is created by mixing the original image and the created interim second image at a predetermined mixing ratio.
Then, at the outputting step, the created processed image is output.
Here, a shape of a region to which each of the pixels included in the interim first image is rendered in the interim second image is elongate in a direction in which a picture made up of pixels included in that region in the original image moves, and that region in the original image is rendered on that pixel in the interim first image.

A program according to another aspect of the present invention is configured to control a computer to function as the above-described image processing device, or to control a computer to perform the above-described image processing method.
The program according to the present invention can be stored on a computer-readable information recording medium such as a compact disk, a flexible disk, a hard disk, a magneto optical disk, a digital video disk, a magnetic tape, a semiconductor memory, etc.
The above-described program can be distributed and sold via a computer communication network, independently from a computer on which the program is executed. Further, the above-described information recording medium can be distributed and sold independently from the computer.

### Effect of the Invention

According to the present invention, it is possible to provide an image processing device and an image processing method suitable for giving an effect of imparting an air of speed to an image, a program for realizing these on a computer, and a computer-readable information recording medium storing the program.

### Brief Description of Drawings

[FIG. 1] It is an explanatory diagram showing a schematic structure of a typical information processing apparatus on which an image processing device according to one embodiment of the present invention will be realized.
[FIG. 2] It is an exemplary diagram showing a schematic structure of an image processing device according to one embodiment of the present invention.
[FIG. 3] It is a flowchart showing the flow of control of an image processing method performed by the image processing device.
[FIGS. 4] They are explanatory diagrams showing the shapes of original images.
[FIGS. 5] They are explanatory diagrams showing how original images are divided.
[FIG. 6] It is an explanatory diagram showing how an original image is divided and a representative value is acquired in a case where a polygon pasting function is used.
[FIG. 7] It is an explanatory diagram showing a schematic structure of an image processing device according to an embodiment seen from another aspect.
[FIG. 8] It is a flowchart showing the flow of control of an image processing method performed by the image processing device.

### Explanation of Reference Numerals

100 game device
101 CPU
102 ROM
103 RAM
104 interface
105 controller
106 external memory
107 image processing unit
108 DVD-ROM drive
109 NIC
110 audio processing unit
201 image processing device
202 dividing unit
203 acquiring unit
204 mixing unit
205 output unit
601 original image
602 first interim image
603 second interim image
701 first creating unit
702 second creating unit

### Best Mode for Carrying Out the Invention

The embodiments of the present invention will be explained below. Embodiments in which the present invention is applied to a game device on which three-dimensional graphics are displayed will be explained below in order to facilitate understanding. However, the present invention can likewise be applied to information processing apparatuses such as computers of various types, PDAs (Personal Data Assistants), portable telephones, etc. That is, the embodiments to be explained below are intended for explanation, not to limit the scope of the present invention. Accordingly, though those having ordinary skill in the art could employ embodiments in which each element or all the elements of the present embodiments are replaced with equivalents of those, such embodiments will also be included in the scope of the present invention.

### Embodiment 1

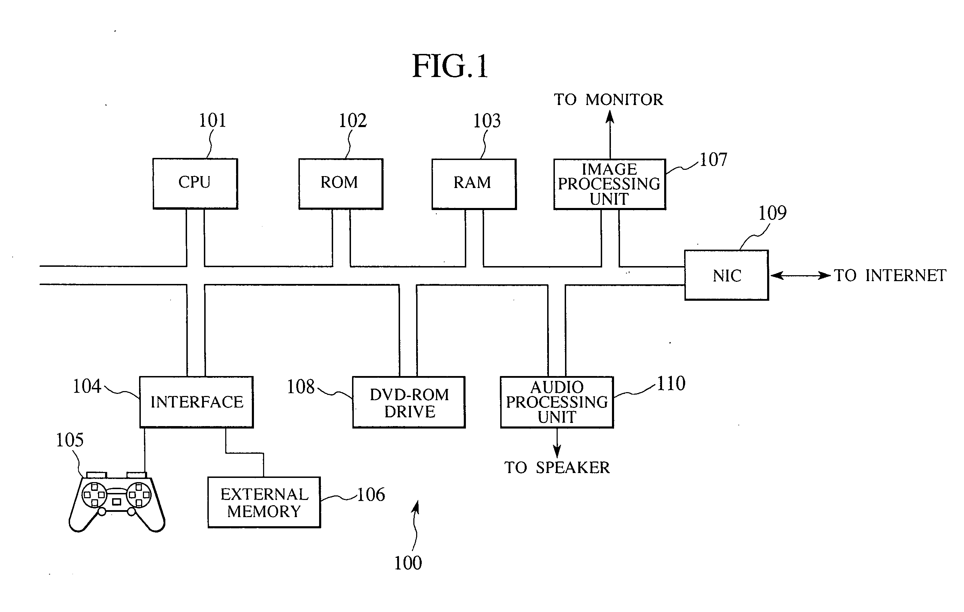

FIG. 1 is an explanatory diagram showing a schematic structure of a typical game device on which an image processing device according to the present invention will be realized. The following explanation will be given with reference to this diagram.

A game device 100 comprises a CPU (Central Processing Unit) 101, a ROM 102, a RAM 103, an interface 104, a controller 105, an external memory 106, an image processing unit 107, a DVD-ROM drive 108, an NIC (Network Interface Card) 109, and an audio processing unit 110.
By loading a DVD-ROM storing a game program and data onto the DVD-ROM drive 108 and turning on the power of the game device 100, the program will be executed and the image processing device according to the present embodiment will be realized.

The CPU 101 controls the operation of the entire game device 100, and is connected to each element to exchange control signals and data. Further, by using an ALU (Arithmetic Logic Unit) (unillustrated), the CPU 101 can perform arithmetic operations such as addition, subtraction, multiplication, division, etc., logical operations such as logical addition, logical multiplication, logical negation, etc., bit operations such as bit addition, bit multiplication, bit inversion, bit shift, bit rotation, etc. upon a storage area, or a register (unillustrated), which can be accessed at a high speed. Further, the CPU 101 itself may be designed to be able to rapidly perform saturate operations such as addition, subtraction, multiplication, division, etc. for dealing with multimedia processes, vector operations such as trigonometric function, etc. or may realize these with a coprocessor.

The ROM 102 stores an IPL (Initial Program Loader) to be executed immediately after the power is turned on, execution of which triggers the program stored on the DVD-ROM to be read into the RAM 103 and executed by the CPU 101. Further, the ROM 102 stores a program and various data for an operating system necessary for controlling the operation of the entire game device 100.

The RAM 103 is for temporarily storing data and programs, and retains the program and data read out from the DVD-ROM, and other data necessary for game proceedings and chat communications. Further, the CPU 101 performs processes such as securing a variable area in the RAM 103 to work the ALU directly upon the value stored in the variable to perform operations, or once storing the value stored in the RAM 103 in the register, performing operations upon the register, and writing back the operation result to the memory, etc.

The controller 105 connected through the interface 104 receives an operation input given by the user when playing a game such as a racing game, etc.
The external memory 106 detachably connected through the interface 104 rewritably stores data indicating the play status (past achievements, etc.) of a racing game, etc., data indicating the progress status of the game, data of chat communication logs (records), etc. The user can store these data on the external memory 106 where needed, by inputting instructions through the controller 105.

The DVD-ROM to be loaded on the DVD-ROM drive 108 stores a program for realizing a game and image data and audio data accompanying the game. Under the control of the CPU 101, the DVD-ROM drive 108 performs a reading process on the DVD-ROM loaded thereon to read out a necessary program and data, which are to be temporarily stored on the RAM 103, etc.

The image processing unit 107 processes the data read out from the DVD-ROM by means of the CPU 101 and an image calculation processor (unillustrated) provided in the image processing unit 107, and thereafter stores the data in a frame memory (unillustrated) provided in the image processing unit 107. The image information stored in the frame memory is converted into a video signal at a predetermined synchronization timing and output to a monitor (unillustrated) connected to the image processing unit 107. Thereby, image displays of various types are available.
The image calculation processor can rapidly perform transparent operations such as overlay operation or α blending of two-dimensional images, and saturate operations of various types.

Further, the image calculation processor can also rapidly perform an operation for rendering, by a Z buffer method, polygon information placed in a virtual three-dimensional space and having various texture information added, to obtain a rendered image of the polygon placed in the virtual three-dimensional space as seen from a predetermined view position along a predetermined direction of sight line.
Further, by the CPU 101 and the image calculation processor working in cooperation, a character string as a two-dimensional image can be depicted on the frame memory, or depicted on the surface of each polygon, according to font information defining the shape of the characters.

Further, it is general that the image calculation processor has a rendering function of projecting a bitmap image (texture image) of a triangle or a quadrangle by appropriately deforming it into an area defining another triangle or quadrangle.

The NIC 109 is for connecting the game device 100 to a computer communication network (unillustrated) such as the Internet, etc., and comprises a 10BASE-T/100BASE-T product used for building a LAN (Local Area Network), an analog modem, an ISDN (Integrated Services Digital Network) modem, or an ADSL (Asymmetric Digital Subscriber Line) modem for connecting to the Internet by using a telephone line, a cable modem for connecting to the Internet by using a cable television line, or the like, and an interface (unillustrated) for intermediating between these and the CPU 101.

The audio processing unit 110 converts audio data read out from the DVD-ROM into an analog audio signal, and outputs the signal from a speaker (unillustrated) connected thereto. Further, under the control of the CPU 101, the audio processing unit 110 generates sound effects and music data to be sounded in the course of the game, and outputs the sounds corresponding to the data from the speaker.
In a case where the audio data recorded on the DVD-ROM is MIDI data, the audio processing unit 110 refers to the music source data included in the data, and converts the MIDI data into PCM data. Further, in a case where the audio data is compressed audio data of ADPCM format, Ogg Vorbis format, etc., the audio processing unit 110 expands the data and converts it into PCM data. By D/A (Digital/Analog) converting the PCM data at a timing corresponding to the sampling frequency of the data and outputting the data to the speaker, it is possible to output the PCM data as audios.

Aside from the above, the game device 100 may be configured to perform the same functions as the ROM 102, the RAM 103, the external memory 106, the DVD-ROM to be loaded on the DVD-ROM drive 108, etc. by using a large-capacity external storage device such as a hard disk, etc.

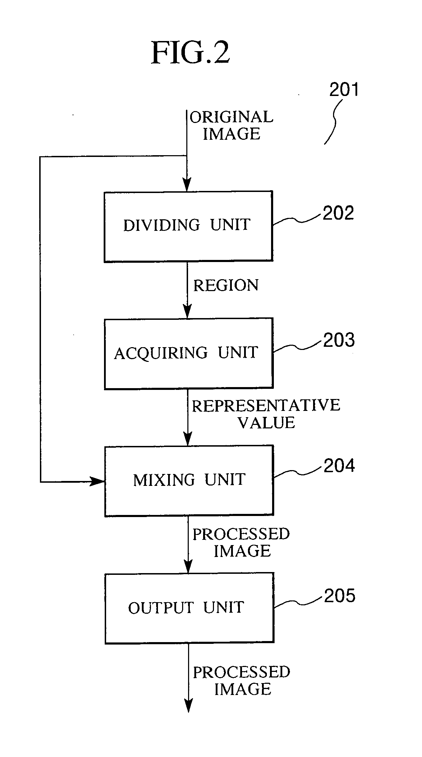

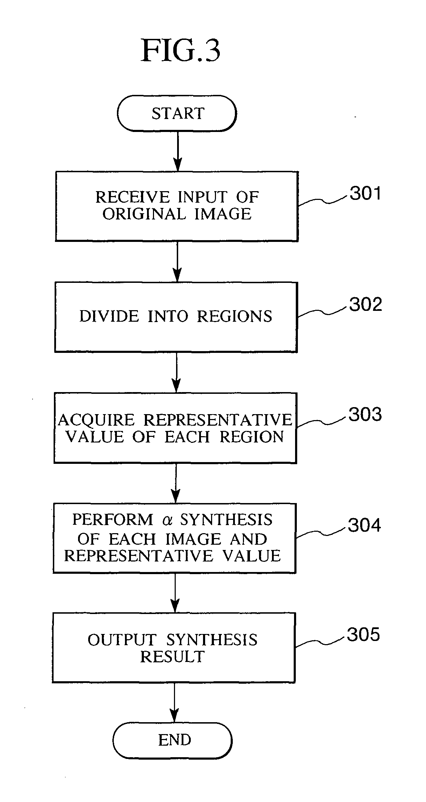

FIG. 2 is an exemplary diagram showing a schematic structure of an image, processing device according to an embodiment of the present invention. The following explanation will be given with reference to this diagram. FIG. 3 is a flowchart showing the flow of control of an image processing method performed by the image processing device. The following explanation will be given with reference to these diagrams.

An image processing device 201 according to the present embodiment comprises a dividing unit 202, an acquiring unit 203, a mixing unit 204, and an output unit 205.

First, the image processing device 201 receives an input of an image (hereinafter referred to as "original image") to be the objective of processing (step S301). The image processing device 201 receives this input by reading out information making up the original image from a hard disk or the DVD-ROM loaded on the DVD-ROM drive 108. The received original image is stored in a temporary storage area in the RAM 103 or the like.

The original image is typically a bitmap image, and each pixel included in the bitmap is processed as pixel to obtain the value representing the hue, the brightness, or the saturation of the pixel or the RGB (Red Green Blue) value of the pixel as the pixel value.

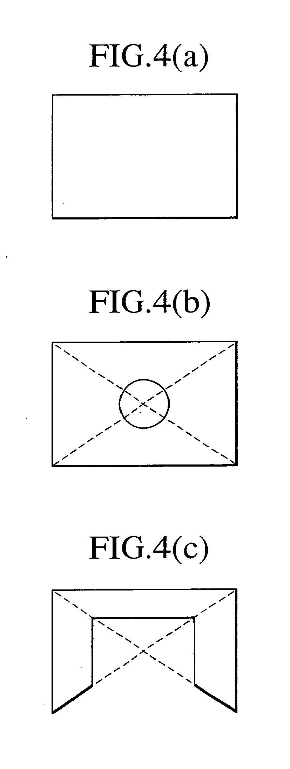

FIGS. 4 are explanatory diagrams showing examples of the shapes of the original image. A bitmap image having a rectangular shape as shown in FIG. 4 (a) is used as the most typical original image. The shape and size of the rectangle can be arbitrarily changed, but typically, these are of the granularity suitable for being displayed on a display or a television apparatus.

Various other shapes are conceivable as the shape of the original image. For example, in representing a state of the external world seen from the viewpoint of the driver of the racing game, the center of the screen is the point of infinity. It is sometimes better not to use the afterimage effect for imparting an air of speed at the portion to be displayed near the point of infinity, for the state of the road surface or the state of other cars may be displayed in that portion. Hence, the portion that remains after boring a hole in the center of the screen as shown in FIG. 4 (b) may be used as the original image.

Other than this, in many cases of displaying a state of the external world seen from the viewpoint of the driver of the racing game, there is no need of using the afterimage effect of imparting an air of speed at the lower portion of the screen, because the appearance of the driver's seat of the car and various information such as velocity, engine condition, etc. are provided there. In such a case, a portion that remains after boring a rectangular in the center of the screen and further boring a trapezoid at the lower portion of the screen as shown in FIG. 4 (c) may be used as the original image.
Furthermore, a further local portion of the shapes as shown in FIGS. 4 (a) to (c) may be used as the original image.

Next, the dividing unit 202 of the image processing device 201 divides the original image into a plurality of regions (step S302). The dividing unit 202 divides the image in such a manner that the shape of each of the plurality of regions is elongate in a direction in which a picture which is defined by pixels included in that region moves.
Thus, the CPU 101 functions as the dividing unit 202 in cooperation with the RAM 103.

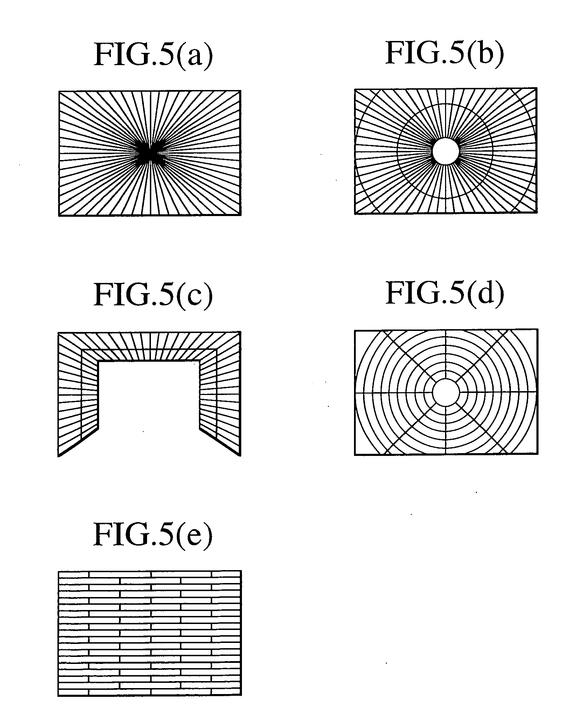

FIGS. 5 are explanatory diagrams showing how the original image shown in FIGS. 4 is divided. Examples of the shape of each region that is obtained by dividing the original images shown in FIGS. 4 (a) to (c) are shown in FIGS. 5 (a) to (e).

Any original image shown in FIGS. 4 is the graphics display of the external world seen from a viewpoint, in a case where an object arranged in the external world within a three-dimensional virtual space or the viewpoint moves.

Accordingly, the picture of the object defined by the pixels in the original image radially moves in a direction to get away from the point of infinity at the center of the screen in a case where the viewpoint approaches the point of infinity (in a case where the sight line faces the advancing direction), or in a direction to approach the point of infinity at the center of the screen in a case where the viewpoint gets away from the point of infinity (in a case where the sight line faces a direction reverse to the advancing direction). Further, the moving velocity of the picture of the object becomes higher as the object goes more away from the center of the screen.

In FIG. 5 (a), line segments that run on the point of infinity divide the original image radially, and each region has a triangle shape.

In FIG. 5 (b), line segments that run on the point of infinity divide the original image radially and at the same time the original image is divided by concentric circles that are centered at the point of infinity, thereby giving each region a sector shape. Further, the center angles of the respective sectors are all uniform according to the division shown in the present diagram, and the lengths of the sides of the sectors that are other than the arc (hereinafter, such sides will be referred to as oblique sides where sectors are concerned) are all uniform. Further, the length of the oblique sides is longer than the length of the arc.

In FIG. 5 (c), line segments that run on the point of infinity divide the original image radially, while the regions are divided by a horizontal line at the upper portion of the original image and the regions are divided by a vertical line at the left and right portions of the original image, making each region a trapezoid. Accordingly, if the oblique sides of the respective trapezoids are extended, they cross at the point of infinity. Further, the lower side and the upper side are horizontal or vertical.

FIG. 5 (d) concerns another division. For example, this is for a case where it is desired to express, by an afterimage expression, an air of speed when the viewpoint is rotating or the external world is rotating. In this case, the pixels representing an object in the external world are to make a generally circular movement around a predetermined center.

Hence, the original image is divided by concentric circles whose center is set at the center of the circular movement, and further divided by straight lines that run on the center of the circular movement. Accordingly, the original image is divided by sectors likewise in FIG. 5 (b), but the length of the arc of the sectors is longer than the length of the oblique lines.

Likewise, FIG. 5 (e) concerns another division, which is for the simplest unidirectional movement. This applies to a case where the sightline faces transversely to the advancing direction, etc. In this case, the picture of an object in the external world moves in parallel with a certain direction. Since it is assumed by this division that the picture of the object in the external world moves in parallel with the horizontal direction, the original image is divided into a plurality of horizontally-long rectangular areas.

Note that in FIG. 5 (e), the division is made in such a manner that the regions are disposed in a staggered manner like bricks are stacked. However, such a division by which the vertexes of the respective regions meet each other simply in a grating or tiling manner may also be adopted.

As known from the examples shown in FIGS. 5 (a) to (e), dividing the original image into shapes which are elongate in a direction in which an afterimage is assumed to appear is one of the features of the present invention. The length and width of the divided regions can be arranged variously.

The width may be generally constant, or may be changed as needed. If the width should be generally constant in a case where there exists a point of infinity, the center angle of the arc or the angle formed by the oblique sides of the trapezoid may be set in inverse proportion to the distance from the point of infinity in the original image.

Further, the length likewise may be generally constant, or may be changed as needed. If the length is changed as needed in a case where there exists a point of infinity, such a manner of making the length longer where farther from the point of infinity may be adopted.

Other than this, the length of the divided regions may be changed in proportion to the relative moving velocity of the viewpoint with respect to the external world in the virtual three-dimensional space. Further, these manners may be combined.

Then, when the original image is divided in any such manner, the acquiring unit 203 acquires a representative value of each of the plurality of regions made by the division, from the pixel values of the pixels included in that region (step S303).

The followings can be considered as the representative value.
(a) The pixel value of a pixel appropriately selected from each region. The position of that pixel may be the center or the gravity point of the region, or any point in the farthest upstream or any point in the farthest downstream in the moving direction of the picture, or various methods may be adopted such as using the pixel that is arranged at the smallest address in the RAM 103.
(b) The average value of the pixel values of the pixels included in each region. In a case where there is prepared such hardware as the image calculation processor provided in the image processing unit 107 or the like, that is exclusively for graphics processing, such an average value can be rapidly calculated. The details will be described later.

The method (a) is one of the simplest manners for selecting a representative value, and can shorten the processing time. Further, depending on the fields of application in which the processed image is used, in many cases, such a simple method can give a sufficient air of speed.

The method (b) is a method similar to the calculation for the motion blur effect, and is such a method as would take the average of the pixels included in each region thereby to adopt, as the picture of the afterimage, a picture that has pixel values whose average value is the same as that of the same shape as that region.

In this manner, the CPU 101 functions as the acquiring unit 203 in cooperation with the RAM 103 and the image processing unit 107.

Then, the mixing unit 204 obtains a processed image, which is the processing result of mixing, at a predetermined mixing ratio, the pixel value of each pixel included in the original image with the representative value acquired from the region in which that pixel is included (step S304).

This process is equivalent to obtaining a new image (processed image), which is the result of performing α synthesis (α blending) of an interim image obtained by entirely filling each region of the original image with the representative value of that region and the original image, at a predetermined α value.

This interim image may be materially created or may be processed as a virtual one by performing calculations pixel by pixel as described above.

The followings can be adopted as the α value used in α blending.
(a) A constant. This corresponds to such a case where the pictures of any objects move at a constant velocity.
(b) To change the value so as to reduce the degree of contribution of the original image in α blending, as the relative moving velocity of the viewpoint with respect to the external world increases.
(c) To raise the degree of contribution of the original image in the neighborhood of the point of infinity, and to make the degree of contribution of the original image lower where farther from the point of infinity.
(d) To combine the methods (b) and (c).

The afterimage effect becomes stronger as the moving velocity becomes higher according to the method (b), and the after effect becomes stronger as the point of infinity becomes farther according to the method (c). Therefore, it is possible to present the effect of a real afterimage to the observer only by appropriately changing the mixing ratio at each pixel, making it possible to easily give an air of speed.

Thus, the CPU 101 functions as the mixing unit 204 in cooperation with the RAM 103 and the image processing unit 107.

Finally, the output unit 205 outputs the obtained processed image (step S305). As the outputting destination of the image, a display device, a television apparatus, or the like that is connected through the image processing unit 107 can be used.
The result of α blending in the above-described manner is displayed and output on a display device or the like. Since the shape of each region is elongate along the direction in which the picture moves, there appears an image in which the interim images are stripes that are elongate in the direction in which the picture moves. Accordingly, α blending produces a video in which the original image is blurred in the moving direction. This gives an effect like an afterimage produced by moving.

As described above, according to the present embodiment, it is possible to easily obtain an afterimage-like effect by dividing an image into regions having a shape elongate in the direction of moving distance, and by acquiring the representative value of those regions, making it possible to easily give an air of speed to the observer.

Other than this, when pictures are observed in a moving image, any picture that is far from the point of infinity moves in the screen at a higher velocity than a picture that is close to the point of infinity. Hence, the mixing ratio is varied from the neighborhood of the point of infinity to the distance from the point of infinity.

### Embodiment 2

The second embodiment of the present invention relates to a scheme involving the use of an image calculation processor, which is obtained by seeing the scheme according to the above-described embodiment from another aspect. Accordingly, the present embodiment can employ the same scheme or modification as the above-described embodiment, unless particularly mentioned.

As described above, it is increasingly happening that the latest game devices 100 and general-purpose computers are equipped with their own image calculation processor. Among such image calculation processors, the major ones are with the function for pasting a polygon represented by a bitmap, on the region of a polygon having different shape and size. Such a function is sometimes provided as a function of rendering by texture pasting, and sometimes provided as a perspective transformation/perspective projection function of various types.

In three-dimensional graphics, the texture information of a triangle, a quadrangle, etc. is pasted on a region arranged in a virtual three-dimensional space, and this is the time when perspective projection is performed. And in performing such pasting, it is possible to increase or decrease the number of pixels.

Therefore, if the number of pixels decreases in pasting a given polygon A on a polygon B having a different shape, a region of the polygon A that is to be projected on a given pixel of the polygon B will serve as "a region obtained by division" according to the above described embodiment, and the pixel value of that pixel of the polygon B will serve as "the representative value". Performing the reverse process of pasting the polygon B onto the polygon A will produce an image in which "that region is entirely filled" with "the representative value".

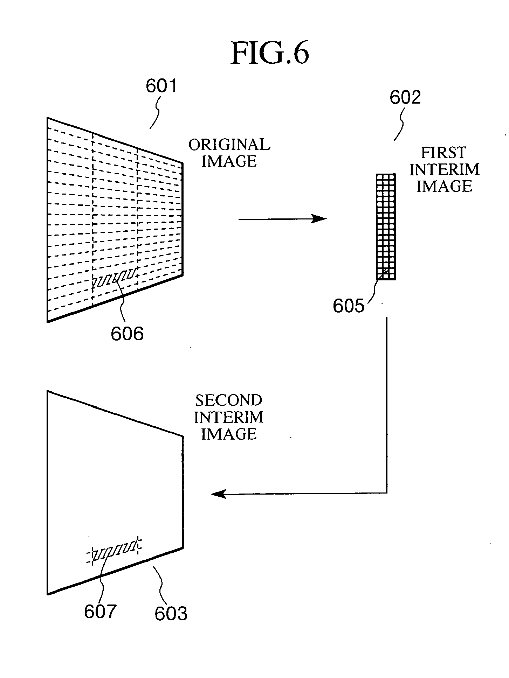

FIG. 6 is an explanatory diagram for explaining the overview of such a process. The following explanation will be given with reference to this diagram.

First, an original image 601 has a trapezoidal shape. This is an original image made from one portion of that, which is shown in FIG. 5 (c).

An image obtained by pasting the original image 601 onto a rectangular region is the first interim image 602.

Further, an image obtained by pasting the first interim image 602 onto a region having the same shape as the original image 601 is the second interim image 603.

Here, attention is drawn to a compression rate of the original image 601 in its vertical direction and a compression rate of the original image 601 in its horizontal direction, which are represented by the unit of pixels of the first interim image 602. In this example, the compression rate in the vertical direction is set to be higher than the compression rate in the horizontal direction. The compression rates can be thought of as the length of each direction represented by the pixel unit.

When things are set so, one pixel 605 of the first interim image 602 corresponds to "the pixels in a region 606 which is elongate in a direction of radial extension from the point of infinity" in the original image 601. That is, "the representative value" of "the pixels in the region 606 which is elongate in the direction of radial extension from the point of infinity" is the pixel value of the one pixel of the first interim image 602.

Then, in the second interim image 603, "a region 607 which is elongate in the direction of radial extension from the point of infinity" is filled with the pixel value of the one pixel of the first interim image 602.

That is, for each of the pixels included in the first interim image 602, the shape of the region into which that pixel is pasted in the second interim image 603 is made elongate in a direction in which the picture of an object made up of the pixels included in that region in the original image 601 moves. Further, that region in the original image 601 is rendered with that corresponding pixel in the first interim image 602.

In other words, in case of performing conversion of the plurality of pixels 606 in the original image 601 → the one point 605 in the first interim image 602→ the plurality of pixels 607 in the second interim image 603, "the plurality of pixels 606 in the original image 601" correspond to "the region", and the shape of the region is made elongate in the direction in which a picture moves.

By using the image calculation processor in this manner, according to the present embodiment, it becomes possible to make the regional division by the dividing unit 202 and the acquisition of the representative value by the acquiring unit 203 to be performed simultaneously. Hereafter, the structural elements as seen from another aspect according to the present embodiment will be explained in detail.

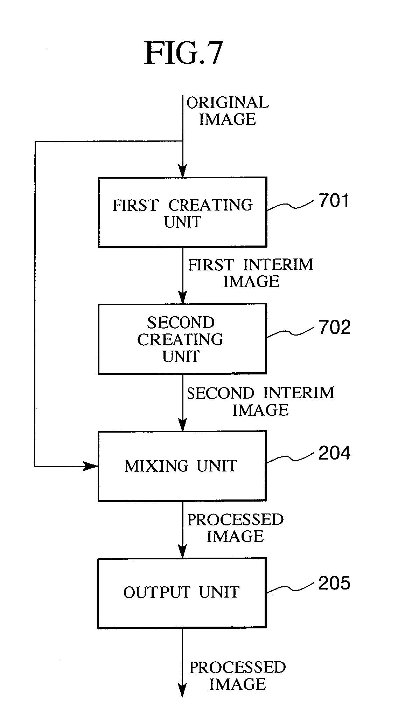

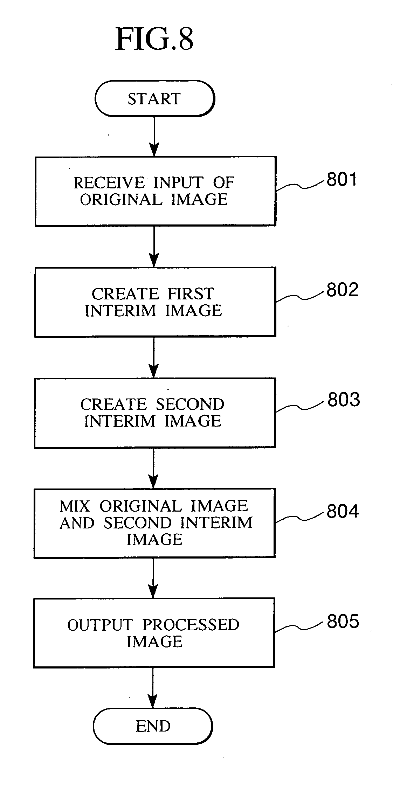

FIG. 7 is an exemplary diagram showing a schematic structure of an image processing device according to the present embodiment. FIG. 8 is a flowchart showing the flow of control of the process of an image processing method performed by the image processing device according to the present embodiment. The following explanation will be given with reference to these diagrams.

When the structure of the image processing device 201 is seen from another aspect according to the present embodiment, the image processing device 201 comprises a first creating unit 701, a second creating unit 702, a mixing unit 204, and an output unit 205.

First, the image processing device 201 receives an input of an original image to be the objective of processing (step S801). This is the same as the above-described embodiment.

Next, the first creating unit 701 of the image processing device 201 renders, as texture, the original image 601 made up of an aggregation of pixels, thereby to create a first interim image 602 made up of an aggregation of less pixels than those of the original image 601 (step S802).

In a case where the original image 601 is defined by a polygon as described above, the first creating unit 701 projects the original image 601 onto a polygon that has the same number of vertexes. Hence, the first interim image 602 to be obtained will be the original image 601 as "collapsed" according to a certain rule.

Then, the second creating unit 702 renders, as texture, the created first interim image 602 to create a second interim image 603, which has the same shape as the original image 601 (step S803).
That is, the second creating unit 702 performs the process of restoring the first interim image 602", which is "collapsed" as described above, to the original shape. Through these processes, the pixel value is defined in the course of a plurality of pixels 606 in the original image 601 → one point 605 in the first interim image 602 → a plurality of pixels 607 in the second interim image 603.
At the stage of the plurality of pixels 606 in the original image 601 → the one point 605 in the first interim image 602, the average value of the plurality of pixels 606 in the original image 601 or a pixel at a predetermined position is to be acquired as the representative value. And any of the plurality of pixels 607 in the second interim image 603 is to have a pixel value equal to the acquired representative value.

Further, the mixing unit 204 creates a processed image by mixing the original image 601 and the created second interim image 603 at a predetermined mixing ratio (step S804). The mixing unit 204 performs α blending likewise in the above-described embodiment. Likewise for the α value, various techniques can be used as in the above-described embodiment.

Then, the output unit 205 outputs the created processed image (step S805), and this process is completed.

Hence, especially in a case where there is the aid of a three-dimensional image calculation processor available, rapid image processing calculations can be performed and an image effect like an afterimage can be achieved to thereby give an air of speed to the observer as well as the above-described invention.

The present application claims priority based on Japanese Patent Application No 2004-273846, the content of which is incorporated herein in its entirety.

### Industrial Applicability

As explained above, it is possible to provide an image processing device and an image processing method suitable for giving an effect of imparting an air of speed to an image, a program for realizing these on a computer, and a computer-readable information recording medium storing the program, and to apply these to imparting an air of speed to a still image, to realizing a racing game or an action game in a game device, and to virtual reality techniques for providing virtual experiences of various types.

## Claims

1. An image processing device, comprising:
a dividing unit which divides an image (hereinafter referred to as "original image"), which is made up of an aggregate of pixels, into a plurality of regions;
an acquiring unit which acquires a representative value of each of the plurality of divided regions, from pixel values of pixels included in that region;
a mixing unit which obtains a processed image, which is a processing result of mixing, for each of the pixels included in the original image, the representative value acquired from the region in which that pixel is included, and the pixel value of that pixel, at a predetermined mixing ratio; and
an output unit which outputs the obtained processed image,
wherein said dividing unit divides the image in a manner that a shape of each of the plurality of regions is elongate in a direction in which a picture made up of pixels included in that region moves.

2. The image processing device according to claim 1,
wherein said acquiring unit acquires an average of the pixel values of each of the plurality of regions, as the representative value of that region.

3. The image processing device according to claim 1,
wherein said acquiring unit acquires, as the representative value of each of the plurality of regions, the pixel value of a pixel at a predetermined position, included in that region.

4. The image processing device according to claim 1,
wherein borders of each of the plurality of regions are defined by a first arc whose center is at a predetermined point, a second arc whose center is at the predetermined point or the predetermined point, a line segment included in a first straight line which runs on the predetermined point, and a line segment included in a second straight line which runs on the predetermined point, and the direction in which the picture moves is a direction which is along the first arc.

5. The image processing device according to claim 1,
wherein borders of each of the plurality of regions are defined by at least a line segment included in a first straight line which runs on a predetermined point and a line segment included in a second straight line which runs on the predetermined point, and the direction in which the picture moves is a direction which converges on the predetermined point or radiates from the predetermined point.

6. The image processing device according to claim 5,
wherein: said dividing unit performs its dividing and said acquiring unit performs its acquiring by performing perspective projection of the original image onto an interim first image made up of an aggregate of a smaller number of pixels than that of the pixels in the original image, performing inverse perspective projection of the interim first image onto an interim second image having a same shape as the original image, and making a pixel value of each pixel included in the interim second image take a representative value of a region which includes a position of that pixel; and
said mixing unit obtains the processed image, by mixing the original image and the interim second image at the predetermined mixing ratio.

7. An image processing device, comprising:
a first creating unit which renders, as texture, an original image made up of an aggregate of pixels, to create an interim first image made up of an aggregate of less pixels than those in the original image;
a second creating unit which renders the created interim first image as texture, to create an interim second image which has a same shape as the original image;
a mixing unit which creates a processed image by mixing the original image and the created interim second image at a predetermined mixing ratio; and
an output unit which outputs the created processed image,
wherein a shape of a region to which each of the pixels included in the interim first image is rendered in the interim second image is elongate in a direction in which a picture made up of pixels included in that region in the original image moves, and that region in the original image is rendered on that pixel in the interim first image.

8. The image processing device according to claim 3,
wherein the predetermined mixing ratio of each of the plurality of regions is defined according to a distance between that region and the predetermined point, and the mixing ratio of the representative value with respect to that pixel value increases as the distance increases.

9. An image processing method, comprising:
a dividing step of dividing an image (hereinafter referred to as "original image"), which is made up of an aggregate of pixels, into a plurality of regions;
an acquiring step of acquiring a representative value of each of the plurality of divided regions, from pixel values of pixels included in that region;
a mixing step of obtaining a processed image, which is a processing result of mixing, for each of the pixels included in the original image, the representative value acquired from the region in which that pixel is included, and the pixel value of that pixel, at a predetermined mixing ratio; and
an outputting step of outputting the obtained processed image,
wherein at said dividing step, the image is divided in a manner that a shape of each of the plurality of regions is elongate in a direction in which a picture made up of pixels included in that region moves.

10. An image processing method, comprising:
a first creating step of rendering, as texture, an original image made up of an aggregate of pixels, to create an interim first image made up of an aggregate of less pixels than those in the original image;
a second creating step of rendering the created interim first image as texture, to create an interim second image which has a same shape as the original image;
a mixing step of creating a processed image by mixing the original image and the created interim second image at a predetermined mixing ratio; and
an outputting step of outputting the created processed image,
wherein a shape of a region to which each of the pixels included in the interim first image is rendered in the interim second image is elongate in a direction in which a picture made up of pixels included in that region in the original image moves, and that region in the original image is rendered on that pixel in the interim first image.

11. A computer-readable information recording medium storing a program for controlling a computer to function as:
a dividing unit which divides an image (hereinafter referred to as "original image"), which is made up of an aggregate of pixels, into a plurality of regions;
an acquiring unit which acquires a representative value of each of the plurality of divided regions, from pixel values of pixels included in that region;
a mixing unit which obtains a processed image, which is a processing result of mixing, for each of the pixels included in the original image, the representative value acquired from the region in which that pixel is included, and the pixel value of that pixel, at a predetermined mixing ratio; and
an output unit which outputs the obtained processed image,
wherein said dividing unit divides the image in a manner that a shape of each of the plurality of regions is elongate in a direction in which a picture made up of pixels included in that region moves.

12. A computer-readable information recording medium storing a program for controlling a computer to function as:
a first creating unit which renders, as texture, an original image made up of an aggregate of pixels, to create an interim first image made up of an aggregate of less pixels than those in the original image;
a second creating unit which renders the created interim first image as texture, to create an interim second image which has a same shape as the original image;
a mixing unit which creates a processed image by mixing the original image and the created interim second image at a predetermined mixing ratio; and
an output unit which outputs the created processed image,
wherein a shape of a region to which each of the pixels included in the interim first image is rendered in the interim second image is elongate in a direction in which a picture made up of pixels included in that region in the original image moves, and that region in the original image is rendered on that pixel in the interim first image.

13. A program for controlling a computer to function as:
a dividing unit which divides an image (hereinafter referred to as "original image"), which is made up of an aggregate of pixels, into a plurality of regions;
an acquiring unit which acquires a representative value of each of the plurality of divided regions, from pixel values of pixels included in that region;
a mixing unit which obtains a processed image, which is a processing result of mixing, for each of the pixels included in the original image, the representative value acquired from the region in which that pixel is included, and the pixel value of that pixel, at a predetermined mixing ratio; and
an output unit which outputs the obtained processed image,
wherein said dividing unit divides the image in a manner that a shape of each of the plurality of regions is elongate in a direction in which a picture made up of pixels included in that region moves.

14. A program for controlling a computer to function as:
a first creating unit which renders, as texture, an original image made up of an aggregate of pixels, to create an interim first image made up of an aggregate of less pixels than those in the original image;
a second creating unit which renders the created interim first image as texture, to create an interim second image which has a same shape as the original image;
a mixing unit which creates a processed image by mixing the original image and the created interim second image at a predetermined mixing ratio; and
an output unit which outputs the created processed image,
wherein a shape of a region to which each of the pixels included in the interim first image is rendered in the interim second image is elongate in a direction in which a picture made up of pixels included in that region in the original image moves, and that region in the original image is rendered on that pixel in the interim first image.
